(19) Europäisches Patentamt
European Patent Office
Office européen des brevets

(11) **EP 0 654 539 B1**

## (12) EUROPÄISCHE PATENTSCHRIFT

(45) Veröffentlichungstag und Bekanntmachung des Hinweises auf die Patenterteilung:
**08.10.1997 Patentblatt 1997/41**

(51) Int Cl.[6]: **C22B 34/12**, C01G 23/053

(21) Anmeldenummer: **94117838.6**

(22) Anmeldetag: **11.11.1994**

(54) **Verfahren zur Herstellung von Titandioxid nach dem Sulfatverfahren**

Process for the preparation of titanium dioxide by the sulphate process

Procédé de préparation du dioxyde de titane selon le procédé au sulfate

(84) Benannte Vertragsstaaten:
**BE DE ES FR GB**

(30) Priorität: **24.11.1993 DE 4339976**

(43) Veröffentlichungstag der Anmeldung:
**24.05.1995 Patentblatt 1995/21**

(73) Patentinhaber: **BAYER AG**
**51368 Leverkusen (DE)**

(72) Erfinder:
- **Müller, Armin, Dr.**
  **D-47829 Krefeld (DE)**
- **Thometzek, Peter, Dr.**
  **D-47800 Krefeld (DE)**

(56) Entgegenhaltungen:
**EP-A- 0 654 540** **US-A- 2 416 216**

- **DATABASE WPI Derwent Publications Ltd., London, GB; AN 74-12790V & SU-A-373 257 (BEKKERMAN L)**
- **DATABASE WPI Derwent Publications Ltd., London, GB; AN 85-288362 & SU-A-1 154 207 (KONOTOPCHIK)**
- **CHEMICAL ABSTRACTS, vol. 97, no. 12, 20. September 1982, Columbus, Ohio, US; abstract no. 94762c, STARKOV V. Seite 148 ; & DEPOSITED DOC. VINITI 1688-81, 1981**

## Beschreibung

Die vorliegende Erfindung betrifft ein Verfahren zur Herstellung von Titandioxid nach dem Sulfatverfahren, bei dem titanhaltige Rohstoffe in Gegenwart von metallischem Eisen und Schwefelsäure aufgeschlossen werden, anschließend hydrolysiert wird und das entstandene Titanoxidhydrat kalziniert wird.

Titandioxid wird fast ausschließlich nach zwei Verfahren, dem Sulfatverfahren und dem Chloridverfahren, kontinuierlich oder diskontinuierlich hergestellt (Ullmanns Encyklopädie der technischen Chemie, 4. Auflage Band 18, Seite 569 ff.).

Beim Sulfatverfahren wird ein titanhaltiger Rohstoff, wie Ilmenit oder Titanschlacke oder ein anderes titanhaltiges Material mit Schwefelsäure (Frischsäure, Oleum und/oder rezyklierte Schwefelsäure) aufgeschlossen. Dieser Aufschluß kann sowohl kontinuierlich als auch diskontinuierlich durchgeführt werden. Der hierbei entstehende feste Aufschlußkuchen wird anschließend mehrere Stunden bei Temperaturen zwischen 100°C und 200°C gereift und anschließend mit Wasser oder verdünnter Schwefelsäure gelöst. Die erhaltene Aufschlußlösung kann je nach eingesetztem Rohstoff verschiedene Salze in gelöster Form enthalten. Beim Einsatz von Ilmeniten oder anderen Titanerzen enthält die Aufschlußlösung im wesentlichen Titanylsulfat und Eisen(III)sulfat in gelöster Form. Beim Einsatz von Titanschlakken, die aus Titanerzen durch Reduktion mit Kohlenstoff hergestellt werden können, enthält die Aufschlußlösung Titanylsulfat, Titan(III)sulfat und Eisen(II)sulfat. Desweiteren enthalten die beiden Aufschlußlösungen verschiedene andere Metallsulfate aus den zum Aufschluß eingesetzten Materialien (Erz, Säure, u.a.), wie zum Beispiel Aluminiumsulfat, Magnesiumsulfat, Chrom(III)sulfat u.a. in gelöster Form sowie feste, nicht aufgeschlossene Gangart.

Für den weiteren Herstellungsprozeß ist es wesentlich, daß das in der Aufschlußlösung enthaltene $Fe^{3+}$ in $Fe^{2+}$ überführt wird, da $Fe^{3+}$ in der Hydrolyse mitgefällt würde, was zu einer unerwünschten Verunreinigung des Titandioxids und hierdurch bedingt zu einer nicht akzeptablen Verschlechterung der optischen Eigenschaften der Titandioxid-Pigmentteilchen führen würde. Bezüglich einer aus Titanschlacke erhaltenen Aufschlußlösung sind in der Regel keine weiteren Maßnahmen zur Reduktion erforderlich. Hinsichtlich einer Aufschlußlösung aus Titanerzen, z.B. aus Ilmeniten muß jedoch eine Reduktion des $Fe^{3+}$ zu $Fe^{2+}$ erfolgen. Diese Reduktion wird im allgemeinen durch Zugabe von metallischem Eisen beim Lösen des Aufschlußkuchens im Aufschlußbehälter bzw. nach dem Lösen des Aufschlußkuchens durch Reduktion der Aufschlußlösung in Reduktionstürmen mit metallischem Eisen durchgeführt. Hierbei ist jedoch nachteilig, daß sich im Rahmen einer Nebenreaktion Wasserstoffgas nach der Reaktionsgleichung

$$Fe + 2H^+ \rightarrow Fe^{2+} + H_2$$

sowohl beim Reduzieren im Aufschlußgefäß als auch im Reduktionsturm bildet. Diese Vorgehensweisen erfordern daher eine genaue Kontrolle der Abgase und führen außerdem zu Verlusten an metallischem Eisen. Bei der Reduktion nach dem Stand der Technik, z.B. in Reduktionstürmen, ist weiterhin nachteilig, daß eine genaue Temperaturkontrolle und eine Kühlung des Reduktionsturms erforderlich ist, um eine vorzeitige Hydrolyse des Titanylsulfats zum Titanoxidhydrat zu vermeiden.

Zur Behebung bzw. Vermeidung der Probleme der Reduktion im Reduktionsturm oder im Aufschlußbehälter sind verschiedene Verfahren bekannt.

So wird in DE-A 541486 vorgeschlagen, sulfidische Erze, sulfidische Eisenverbindungen bzw. eine separat mit metallischem Eisen hergestellte $Ti^{3+}$-Lösung zum Aufschluß des Titanerzes zuzusetzen.

Ein anderes Verfahren (DE-A 2951799) beschreibt die Zumischung von Titanschlacke zu Ilmeniten in bestimmten Verhältnissen von $Ti^{3+}:Fe^{3+}$ und ihren gemeinsamen Aufschluß mit Schwefelsäure.

In weiteren Verfahren (US 4288417, US 4288415) wird das Titanerz mit Schwefelsäure einer Konzentration von 25 bis 60 % und bei Aufschlußtemperaturen bis 140°C gemeinsam mit metallischem Eisen gelaugt und hierbei eine $Ti^{3+}$-haltige Lösung erhalten. Ähnliche Aufschlußverfahren bei ca. 180°C sind von SU-A-1 154 207 und SU-A-373 257 bekannt.

Neben den obengenannten Verfahren sind verschiedene weitere Verfahren bekannt, bei denen die Reduktion des $Fe^{3+}$ in der Aufschlußlösung vor der Hydrolyse stattfindet. So werden die Nachteile einer Reduktion der Aufschlußlösung mit metallischem Eisen teilweise behoben, indem die Reduktion mit $Ti^{3+}$-haltigen Lösungen durchgeführt wird. Diese Lösungen können auf verschiedenen Wegen hergestellt werden.

In DE-A 2015155 bzw. US 3416885 wird vorgeschlagen zur Reduktion von $Fe^{3+}$-haltigen Aufschlußlösungen metallisches Eisen einzusetzen, das durch Reduktion von Titaneisenerz zu Titanschlacke hergestellt wurde. Dieses Eisen wird wiederum erst mit einem Teil der Aufschluß($Ti^{4+}$)lösung umgesetzt, um eine Lösung mit hohen Gehalten an $Ti^{3+}$ zu erhalten. Diese Lösung mit den hohen $Ti^{3+}$-Gehalten wird dann zur Reduktion der Aufschlußlösung eingesetzt.

In US 2049504 wird ein Prozeß zur Reduktion von $Ti^{4+}$-haltigen und $Fe^{3+}$-haltigen Lösungen beschrieben, bei welchem die Reduktion mit einer $Ti^{3+}$-haltigen Lösung erfolgt, die durch Reduktion einer $Ti^{4+}$-haltigen Lösung mit Ca, $H_2$, Mg, Al, Zn, Fe, oder Sn hergestellt wurde.

In FR-A 2363642 wird anstelle der Reduktion von $Ti^{4+}$- und $Fe^{3+}$-haltigen Lösungen aus Ilmenitaufschlüssen mittels metallischem Eisen mit einem elektrochemischen Reaktor mit Kathode, Anode, Diaphragma und kontinuierlicher Spannungsquelle reduziert.

Nachteil all dieser Verfahren ist, daß sie technisch aufwendig sind und daß die Reduktion kontrolliert durchgeführt werden muß.

Aufgabe war es daher, ein Verfahren zur Herstellung von Titandioxid zur Verfügung zu stellen, bei dem die Reduktion von vorhandenem $Fe^{3+}$ einfach durchzuführen ist, ohne daß die obengenannten Nachteile auftreten, oder bei dem erst gar kein $Fe^{3+}$ entsteht.

Diese Aufgabe konnte mit dem erfindungsgemäßen Verfahren gelöst werden.

Gegenstand der Erfindung ist ein Verfahren zur Herstellung von Titandioxid nach dem Sulfatverfahren durch Aufschluß von titanhaltigen Rohstoffen mit Schwefelsäure unter Bildung sogenannter Schwarzlösung, Reduktion von $Fe^{3+}$ in der Schwarzlösung, Hydrolyse der Schwarzlösung unter Bildung von Titanoxidhydrat und sogenannter Dünnsäure, Kalzinieren des Titanoxidhydrates zu Titandioxid, welches dadurch gekennzeichnet ist, daß vor oder während des Aufschlusses metallisches Eisen zugesetzt wird und daß die Reduktion in der Schwarzlösung mit einer $Ti^{3+}$-haltigen Lösung durchgeführt wird, die durch den Aufschluß von titanhaltigen Rückständen aus der Titandioxidproduktion oder durch den Aufschluß von titanhaltigen Rohstoffen oder durch den Aufschluß von Gemischen davon mit Schwefelsäure unter Zugabe von metallischem Eisen hergestellt wird.

Die Konzentration der im Aufschluß vorhandenen Schwefelsäure beträgt vorzugsweise 65 bis 100 Gew.-%, besonders bevorzugt 80 bis 96 Gew.-% $H_2SO_4$.

Die Aufschlußtemperatur beträgt bevorzugt maximal 150°C bis 300°C, besonders bevorzugt 170°C bis 220°C.

Bevorzugt wird als metallisches Eisen Stahlschrott, Gußschrott und/oder anderes metallisches Eisen enthaltenes Material mit einem Gehalt von >1 Gew.-% metallischem Eisen, bezogen auf das Gesamtgewicht eingesetzt.

Aufgrund der unterschiedlichen Fe:Ti-Verhältnisse in den eingesetzten Rohstoffen und der unterschiedlichen Aufschlußbedingungen ist es nicht allgemein möglich, die im Einzelfall erforderliche Menge an metallischem Eisen, die zum Aufschluß hinzugegeben werden muß, um das vorhandene $Fe^{3+}$ zu reduzieren und gegebenenfalls Spuren bis 1 Gew.-% an $Ti^{3+}$ zu erzeugen, anzugeben. Dem Fachmann ist es jedoch anhand weniger Versuche möglich, diese Menge an metallischem Eisen, die für den vorliegenden Rohstoff und die Aufschlußbedingungen erforderlich ist, zu ermitteln.

Als titanhaltiger Rohstoff werden insbesondere Titanerze wie Ilmenite, Schlacken, nicht aufgeschlossener Rückstand aus einem Aufschluß von titanhaltigen Rohstoffen nach dem Sulfatverfahren und Gemische davon eingesetzt.

Überraschend wurde gefunden, daß es möglich und sogar vorteilhaft ist, den Aufschluß von titanhaltigen Rohstoffen mit Schwefelsäure in Gegenwart von metallischem Eisen, das vor oder während des Aufschlusses zugesetzt wird, durchzuführen, ohne daß die Aufschlußreaktion an Heftigkeit zunimmt. Wider Erwarten wird durch die erfindungsgemäße Zugabe von metallischem Eisen vor oder während des Aufschlusses eine Aufschlußlösung erhalten, die kein oder kaum $Fe^{3+}$ enthält, so daß davon auszugehen ist, daß trotz der sauren Lösung nicht wie erwartet, die Reaktion zwischen Protonen und metallischem Eisen, sondern direkt oder indirekt eine Reaktion zwischen $Fe^{3+}$ und metallischem Eisen stattfindet.

Besonders erfolgreich wird das erfindungsgemäße Verfahren bei Ilmeniten, die mit Frischschwefelsäure und/oder Oleum und/oder aus dem Titandioxidprozeß und/oder anderen technischen Verfahren stammender rezyklierter Schwefelsäure aufgeschlossen werden, durchgeführt, wenn Gußspäne und/oder Stahlspäne und/oder andere metallisches Eisen enthaltende Materialspäne eingesetzt werden.

Der Vorteil des Eisenzusatzes vor oder während der Aufschlußreaktion besteht darin, daß die Probleme der Reduktion in der Aufschlußlösung, z.B. im Reduktionsturm, wie Bildung von explosionsfahigen Wasserstoffgasgemischen nicht auftreten.

Ein weiterer Vorteil des erfindungsgemäßen Verfahrens ist, daß preisgünstiges metallisches Eisen in Form von Schrott oder Gußeisen eingesetzt werden kann, das aufgrund seiner geringen Teilchengröße für eine Reduktion im Reduktionsturm nicht geeignet ist.

Ein weiterer Vorteil ist, daß durch den Löseprozeß des Eisens während des Aufschlusses zusätzlich Energie in den Aufschluß eingetragen wird, so daß der Aufschlußgrad steigt. Hierdurch ist der Einsatz an reaktionsträgeren Titanrohstoffen, die durch die zusätzlich durch den Löseprozeß des metallischen Eisens in den Aufschluß eingebrachte Energie besser aufgeschlossen werden können, möglich.

Die Erfindung soll anhand der nachfolgenden Beispiele näher erläutert werden.

## Beispiel 1

Es werden 400 g Ilmenit mit einem $TiO_2$-Gehalt von 44,5 Gew.-% 2 Stunden in einer Laborkugelmühle gemahlen, so daß 86 Gew.-% der Ilmenitteilchen kleiner 40 μm sind. Die Ilmenitmahlung wird mit 15 g Feingußspänen trocken vermischt. Diese Mischung wird anschließend auf 55°C erwärmt, mit 76 gew.-%iger Schwefelsäure angemaischt und in ein Gefäß gegeben. Anschließend wird Oleum in einer Menge zugegeben, so daß eine Säurezahl von 2,1 und eine Säureendkonzentration von 82,0 Gew.-% vorliegen. Nach Zugabe des Oleums erwärmt sich die Aufschlußmischung durch die freiwerdende Mischungswärme der Säurekomponenten und durch die beginnende Aufschlußreaktion. Nach etwa 10 bis 15 Minuten ist eine maximale Aufschlußtemperatur von 184°C erreicht.

Der entstandene Aufschlußkuchen wird 3 Stunden bei einer Temperatur von 180°C gehalten und anschließend mit einer etwa 5 gew.-%igen Schwefelsäure gelöst. Die erhaltene Aufschlußlösung wird mit 3 bis 4 g metallischem Eisen auf einen $Ti^{3+}$-Gehalt von 1 bis 2 g/l nachreduziert. Die $TiO_2$-Ausbeute beträgt 96,8 bis 97,2 Gew.-%.

**Vergleichsbeispiel 1**

Es wurde der gleiche Versuch wie in Beispiel 1 jedoch ohne Zugabe der Feingußspäne zum Aufschluß durchgeführt. Bei diesem Versuch wurde eine maximale Aufschlußtemperatur von 182°C nach 16 Minuten erreicht. Die nach dem Lösen erhaltene Aufschlußlösung wurde mit 19 g metallischem Eisen reduziert. Der $Ti^{3+}$-Gehalt in der Aufschlußlösung betrug 2,7 g/l. Die erzielte $TiO_2$-Ausbeute betrug 95,8 Gew.-%.

**Beispiel 2**

Der Aufschluß von Ilmenit mit Eisen wurde wie im Beispiel 1 durchgeführt (400 g Ilmenit mit 15 g Feingußspänen, Säurezahl 2,1; Säureendkonzentration 82 Gew.-%) und als Aufschlußaggregat ein Kneter zur Simulation einer kontinuierlichen Aufschlußschnecke verwendet. In diesem Versuch ergab sich eine maximale Aufschlußtemperatur von 162°C nach 22 Minuten. Die nach dem Lösen erhaltene Aufschlußlösung wurde mit 6,3 g metallischem Eisen auf einen $Ti^{3+}$-Gehalt von 5,7 g/l nachreduziert. Die $TiO_2$-Ausbeute lag bei 97,2 Gew.-%.

**Beispiel 3**

Es werden 321 g Ilmenit mit einem $TiO_2$-Gehalt von 44,5 Gew.-% und einem Gesamteisengehalt von 34,8 Gew.-% sowie 79 g Ilmenit mit einem $TiO_2$-Gehalt von 60,0 Gew.-% und einem Gesamteisengehalt von 23,9 Gew.% jeweils 2 Stunden in einer Laborkugelmühle gemahlen, so daß > 70 Gew.-% der Ilmenitteilchen kleiner 40 µm sind. Die Ilmenitmahlungen werden mit einer bestimmten Menge an Feingußspänen (metallisches Eisen) trocken vermischt (siehe Tabelle 1). Die Ilmenit-Feinguß-Mischungen werden anschließend auf 55°C erwärmt, mit 76 gew.-%iger Schwefelsäure angemaischt und in ein Gefäß gegeben. Anschließend wird Oleum in der Menge zugegeben, so daß eine Säurezahl von 2,1 und eine Säureendkonzentration von 82,0 Gew.-% vorliegen. Bei der Berechnung der Säurezahl muß die zur Lösung des metallischen Eisens erforderliche Schwefelsäuremenge berücksichtigt werden. Nach Zugabe des Oleums erwärmt sich die Aufschlußmischung durch die freiwerdende Mischungswärme der Säurekomponenten und durch die beginnende Aufschlußreaktion. Nach etwa 25 bis 30 Minuten ist eine maximale Aufschlußtemperatur von 181°C erreicht.

Der entstandene Aufschlußkuchen wird 1,5 Stunden bei einer Temperatur von 180°C gehalten und anschließend mit einer etwa 5 gew.-%igen Schwefelsäure gelöst. Die erhaltene Aufschlußlösung enthält je nach Höhe des zugesretzten metallischen Eisens mehr oder weniger $Fe^{3+}$ bzw. $Ti^{3+}$. Die Analyse der Aufschlußlösungen des Beispiels ist in der Tabelle 1 aufgeführt.

Tabelle 1

| Versuch | 3a | 3b | 3c | 3d |
|---|---|---|---|---|
| zum Aufschluß zugesetztes metallisches Fe in [g] | 15 | 20 | 30 | 35 |
| $Fe^{3+}$ in der Aufschlußlösung in [Gew.-%], bezogen auf das Gesamteisen der eingesetzten Ilmenite | 13,8 | 10,6 | 1,1 | 0 |
| $Ti^{3+}$ in der Aufschlußlösung in [g/l] | 0 | 0 | 0 | 1,4 |

**Vergleichsbeispiel 2**

Es wurde der gleiche Versuch wie in Beispiel 3 jedoch ohne Zugabe der Feingußspäne zum Aufschluß durchgeführt. Bei diesem Versuch wurde eine maximale Aufschlußtemperatur von 182°C nach 20 Minuten erreicht. Die nach dem Losen erhaltene Aufschlußlösung wurde mit 25 g metallischem Eisen reduziert. Der $Ti^{3+}$-Gehalt in der Aufschlußlösung betrug 3,6 g/l.

**Patentansprüche**

1. Verfahren zur Herstellung von Titandioxid nach dem Sulfatverfahren durch Aufschluß von titanhaltigen Rohstoffen mit Schwefelsäure unter Bildung sogenannter Schwarzlösung, Reduktion von $Fe^{3+}$ in der Schwarzlösung, Hydrolyse der Schwarzlösung unter Bildung von Titanoxidhydrat und sogenannter Dünnsäure, Kalzinieren des Titanoxidhydrates zu Titandioxid, dadurch gekennzeichnet, daß vor oder während des Aufschlusses metallisches Eisen zugesetzt wird und daß die Reduktion in der Schwarzlösung mit einer $Ti^{3+}$-haltigen Lösung durchgeführt wird, die durch den Aufschluß von titanhaltigen Rückstanden aus der Titandioxidproduktion oder durch den Aufschluß von titanhaltigen Rohstoffen oder durch den Aufschluß von Gemischen davon mit Schwefelsäure unter Zugabe von metallischem Eisen hergestellt wird.

2. Verfahren gemäß Anspruch 1, dadurch gekennzeichnet, daß als metallisches Eisen Stahlschrott und/oder Gußschrott und/oder anderes metallisches Eisen enthaltendes Material mit einem Gehalt von >1 Gew.-% metallischem Eisen, bezogen auf Gesamtgewicht eingesetzt wird.

3. Verfahren gemäß Anspruch 1, dadurch gekennzeichnet, daß die Konzentration der im Aufschluß vorhandenen Schwefelsäure 65 bis 100 Gew.-%, insbesondere 80 bis 96 Gew.-% $H_2SO_4$ beträgt und die maximale Aufschlußtemperatur 150°C bis 300°C, insbesondere 170°C bis 220°C beträgt.

4. Verfahren gemäß Anspruch 1, dadurch gekennzeichnet, daß als titanhaltiger Rohstoff Titanerze, Schlacken, nicht aufgeschlossener Rückstand aus einem Aufschluß von titanhaltigen Rohstoffen nach dem Sulfatverfahren und Gemische davon eingesetzt werden.

**Claims**

1. Process for the preparation of titanium dioxide by the sulphate process by digestion of titanium-containing raw materials with sulphuric acid with the formation of so-called black solution, reduction of $Fe^{3+}$ in the black solution, hydrolysis of the black solution with the formation of titanium oxide hydrate and so-called dilute acid, calcination of the titanium oxide hydrate to titanium dioxide, characterised in that, before or during the digestion, metallic iron is added and that the reduction in the black solution is conducted with a $Ti^{3+}$-containing solution which is prepared by the digestion of titanium-containing residues from titanium dioxide production or by the digestion of titanium-containing raw materials or by the digestion of mixtures thereof with sulphuric acid with the addition of metallic iron.

2. Process according to claim 1, characterised in that steel scrap and/or foundry scrap and/or other material containing metallic iron with a content of >1 wt.% metallic iron, based on total weight, is used.

3. Process according to claim 1, characterised in that the concentration of the sulphuric acid present in the digestion is 65 to 100 wt.%, particularly 80 to 96 wt.% $H_2SO_4$ and the maximum digestion temperature is 150°C to 300°C, particularly 170°C to 220°C.

4. Process according to claim 1, characterised in that titanium ores, slags, undigested residue from a digestion of titanium-containing raw materials by the sulphate process and mixtures thereof are used as the titanium-containing raw material.

**Revendications**

1. Procédé pour la préparation du dioxyde de titane par la variante au sulfate, dans laquelle on attaque les matières premières titanifères par l'acide sulfurique, formant ainsi une solution "noire" dans laquelle on réduit le $Fe^{+3}$, on hydrolyse la solution noire avec formation d'oxyde de titane hydraté et d'acide "dilué", on calcine l'oxyde de titane hydraté, ce qui donne le dioxyde de titane, caractérisé en ce que, avant ou durant l'attaque, on ajoute du fer métallique et en ce que la réduction de la solution noire est réalisée à l'aide d'une solution contenant $Ti^{+3}$ qui a été préparée par attaque de résidus titanifères provenant de la production du dioxyde de titane ou par attaque de matières premières titanifères ou par attaque de mélanges de ces matières par l'acide sulfurique avec adjonction de fer métallique.

2. Procédé selon la revendication 1, caractérisé en ce que le fer métallique utilisé consiste en grenaille d'acier et/ou grenaille de fonte et/ou une autre matière contenant du fer métallique, à une teneur supérieure à 1 % en poids en fer métallique par rapport au poids total.

3. Procédé selon la revendication 1 caractérisé en ce que la concentration de l'acide sulfurique présent à l'attaque est de 65 à 100 % en poids, plus spécialement de 80 à 96 % en poids de $H_2SO_4$ et en ce que la température maximale d'attaque est de 150 à 300°C, plus spécialement de 170 à 220°C.

4. Procédé selon la revendication 1, caractérisé en ce que l'on met en oeuvre en tant que matières premières titanifères des minerais de titane, des scories, un résidu non attaqué d'une attaque de matières premières titanifères par le procédé au sulfate ou leurs mélanges.